# EUROPEAN PATENT APPLICATION

(11) **EP 4 671 178 A1**
(43) Date of publication of application: **31.12.2025**
(21) Application number: 25185135.8
(22) Date of filing: 25.06.2025
(51) Int. Cl.: B65H 31/20, B65H 1/04, B65H 31/02

(54) **DOCUMENT FEEDING DEVICE AND CORRESPONDING IMAGE FORMING APPARATUS**

(30) Priority: 25.06.2024 JP 2024102059
(71) Applicant: KYOCERA Document Solutions Inc., Osaka-shi, Osaka 540-8585 (JP)
(72) Inventor: Iketani, Takeshi, Osaka-shi, 540-8585 (JP)
(74) Representative: Plougmann Vingtoft a/s

(57) **Abstract**

A document feeding device (3) includes a sheet feed tray (31), a sheet discharge tray (32), and a restricting portion (33). The sheet feed tray (31) feeds documents (M) to be fed in a first direction (X1). The sheet discharge tray (32), to which the fed document (M) is discharged in a second direction (X2) opposite to the first direction (X1), is arranged below the sheet feed tray (31). The restricting portion (33) restricts movement in the second direction (X2) of the document (M) discharged onto the sheet discharge tray (32). The restricting portion (33) includes a first extension portion (330) and a second extension portion (340). The first extension portion (330) extends in the second direction (X2) from an end in the second direction (X2) of the sheet discharge tray (32). The second extension portion (340) extends upward in an up direction from the first extension portion (330).

## Description

### BACKGROUND

The present disclosure relates to a document feeding device and an image forming apparatus.

The document feeding device includes a sheet feed tray, a sheet discharge tray, a document reading portion, a sheet discharge portion, and a stopper. The sheet feed tray feeds a document to the document reading portion. The sheet discharge tray receives the document that is discharged by the sheet discharge portion after being read. The stopper comes in contact with a leading end of the document in the conveying direction.

### SUMMARY

According to a first aspect of the present disclosure, a document feeding device includes a sheet feed tray, a sheet discharge tray, and a restricting portion. The sheet feed tray feeds documents to be fed in a first direction. The sheet discharge tray, to which the fed document is discharged in a second direction opposite to the first direction, is arranged below the sheet feed tray. The restricting portion restricts movement in the second direction of the document discharged onto the sheet discharge tray. The restricting portion includes a first extension portion and a second extension portion. The first extension portion extends in the second direction from an end in the second direction of the sheet discharge tray. The second extension portion extends upward in an up direction from the first extension portion.

According to a second aspect of the present disclosure, there is provided a document feeding device and an image forming portion. The document feeding device is described in the first aspect. The image forming portion forms an image on a recording medium.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a diagram showing a configuration of an image forming apparatus of an embodiment according to the present disclosure.
FIG. 2 is a diagram showing a configuration of a document feeding device in the image forming apparatus shown in FIG. 1.
FIG. 3 is a view of the document feeding device as seen from the right.
FIG. 4 is a perspective view of a restricting portion attached to a sheet discharge tray.
FIG. 5 is a perspective view showing a state before the restricting portion is attached.
FIG. 6 is a perspective view showing the state after the restricting portion has been attached.
FIG. 7 is a perspective view showing a stored state of the restricting portion according to a modification.
FIG. 8 is a perspective view showing a state in which the restricting portion according to the modification is used.

### DETAILED DESCRIPTION

Hereinafter, embodiments of a technique according to the present disclosure will be described with reference to the drawings. Note that in the drawings, the same or corresponding parts are given the same reference symbols and descriptions thereof will not be repeated.

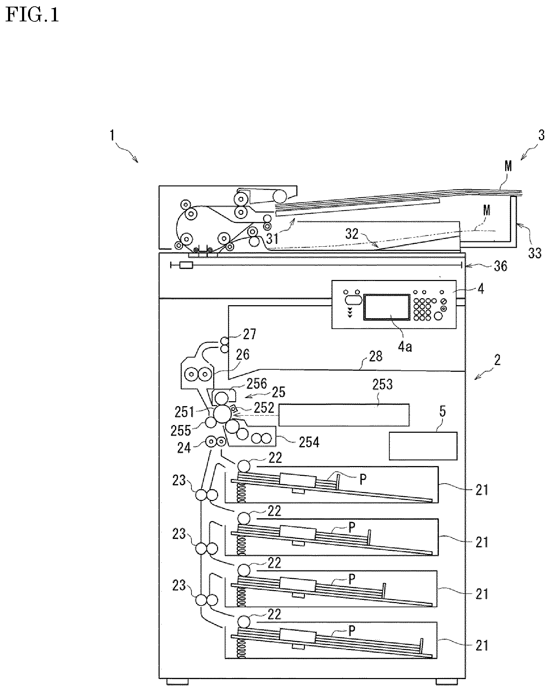

First, an image forming apparatus 1 according to the present embodiment will be described with reference to FIG. 1. FIG. 1 is a diagram showing a configuration of an image forming apparatus 1 according to the present embodiment. Here, the image forming apparatus 1 is a multifunction peripheral (MFP). The image forming apparatus 1 has functions of a scanner, a copier, a printer, and a facsimile. The image forming apparatus 1 includes an image forming unit 2, a document feeding device 3, an operation panel 4, and a control portion 5. The document feeding device 3 includes an image reading portion 36. The operation panel 4 includes a touch panel 4a.

The image forming unit 2 forms an image on a recording paper P, which is an example of a recording medium. The image reading portion 36 reads an image formed on a document M. The document feeding device 3 conveys the document M to be read. The operation panel 4 includes a touch panel 4a and receives operations from a user for operating the image forming apparatus 1. The control portion 5 performs overall control of operation of the image forming apparatus 1.

The image forming unit 2 includes sheet feed cassettes 21, sheet feed rollers 22, conveying rollers 23, a registration roller 24, an image forming portion 25, a fixing device 26, a discharge roller 27, and a discharge tray 28. The sheet feed roller 22 feeds out the recording paper P one sheet at a time from the sheet feed cassette 21. The recording paper P fed by the sheet feed roller 22 is conveyed to the image forming portion 25 by the conveying rollers 23 and the registration roller 24.

The image forming portion 25 forms an image on the recording paper P conveyed from the sheet feed cassette 21. The image forming portion 25 includes a photoconductor drum 251, a charging portion 252, an exposing portion 253, a developing portion 254, a transfer roller 255, and a cleaning portion 256. The photoconductor drum 251 is a cylindrical rotating body, and an electrostatic latent image is formed on a peripheral surface thereof. The charging portion 252 charges the photoconductor drum 251 to a predetermined potential. The exposing portion 253 irradiates the photoconductor drum 251 with a laser beam based on image data, thereby forming an electrostatic latent image on the photoconductor drum 251 according to the image data. Note that the image data may be, for example, image data generated by the image reading portion 36 reading the document M, or image data received from an external computer via a communication network (not shown). The recording paper P on which the image has been formed by the image forming portion 25 is conveyed to the fixing device 26.

The developing portion 254 supplies toner to the electrostatic latent image formed on the photoconductor drum 251 to develop it, thereby forming a toner image on the photoconductor drum 251. The transfer roller 255 transfers the toner image on the photoconductor drum 251 onto the recording paper P. The cleaning portion 256 removes residual toner remaining on the photoconductor drum 251 after transfer.

The fixing device 26 thermally fixes the image formed on the recording paper P to the recording paper P. The fixing device 26 includes a heating roller with a built-in heat generating element, and a pressure roller. Both the heating roller and the pressure roller are brought into pressure contact with each other to form a fixing nip portion. As the recording paper P passes through the fixing nip portion, the toner attached to the surface of the recording paper P is melted and heated, and the toner image is fixed to the recording paper P. The recording paper P with the fixed toner image is discharged onto a discharge tray 28 by the discharge roller 27.

The control portion 5 includes a central processing unit (CPU), a read only memory (ROM), and a random access memory (RAM). The ROM stores a control program. The CPU reads and executes the control program stored in the ROM to function as various functional portions. The RAM is used as a working area when the CPU executes the control program.

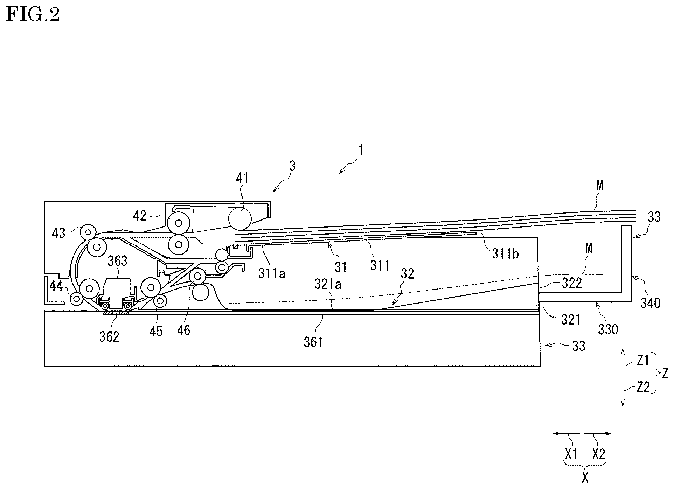

Next, the document feeding device 3 will be described with reference to FIG. 2. FIG. 2 is a diagram showing a configuration of the document feeding device 3 in the image forming apparatus 1 shown in FIG. 1.

The image reading portion 36 reads the image of the document M. The image reading portion 36 includes a contact glass, a reading guide 363, a light source (not shown), a plurality of mirrors (not shown), a plurality of carriages (not shown), an imaging lens (not shown), and a charge coupled device (CCD) (not shown). The mirror is supported by a carriage. The contact glass has a wide document placement glass 361 located on a side in a discharge direction of the document M, and a narrow automatic document reading glass 362 located on the opposite side to the document placement glass 361.

In the following, to facilitate understanding of the embodiments, an X direction, a Y direction, and a Z direction that are perpendicular to each other may be described. The X direction indicates, for example, a direction in which the document M is conveyed. More specifically, a front-rear direction X is defined such that a direction in which the document M is fed out is a front direction X1, and the opposite direction is a rear direction X2. The Y direction indicates, for example, a left-right direction of the image forming apparatus 1 when the image forming apparatus 1 is viewed from the rear direction X2. More specifically, the left-right direction Y is defined such that a left direction Y1 faces the front direction of the image forming apparatus 1, and the opposite direction is a right direction Y2. The Z direction indicates a direction perpendicular to the front-rear direction X and the left-right direction Y. More specifically, an up-down direction Z is defined such that an upward direction of the image forming apparatus 1 is an up direction Z1, and the opposite direction is a down direction Z2. The front direction X1 corresponds to, for example, a "first direction", and the rear direction X2 corresponds to, for example, a "second direction". In addition, the left-right direction Y corresponds to, for example, a "third direction".

There are two types of methods for reading an image of the document M by the image reading portion 36: a flatbed reading mode and an auto document feeder (ADF) reading mode. In the flatbed reading mode, an image of a document M placed on the document placement glass 361 is read. In the ADF reading mode, a document M is conveyed by the document feeding device 3, and the image of the document M is read when the document M passes over the automatic document reading glass 362.

More specifically, in the flatbed reading mode, the light source irradiates the document M placed on the document placement glass 361, and light reflected from the document M is reflected by each mirror and enters the imaging lens. Light incident on the imaging lens is imaged on the light receiving surface of the CCD by photoelectric conversion, and is output as an image signal. When reading of one line is completed, each carriage is moved in the front-rear direction X perpendicular to the left-right direction Y, which is the main scanning direction of the document M, and the next line is read.

On the other hand, in the ADF reading mode, when the document M fed out by the document feeding device 3 passes through the reading position, which is a gap between the automatic document reading glass 362 and the reading guide 363, the light source irradiates light onto the document M through the automatic document reading glass 362. The light reflected from the document M is reflected by each mirror and enters the imaging lens, and the light incident on the imaging lens is imaged by photoelectric conversion on the light receiving surface of the CCD and output as an image signal.

As shown in FIG. 2, the document feeding device 3 includes a sheet feed tray 31, a sheet discharge tray 32, and a restricting portion 33.

The sheet feed tray 31 is a place where a plurality of documents M are placed. The sheet feed tray 31 supplies a document M that is fed out in the front direction X1. A lift mechanism (not shown) is provided on a bottom surface of the sheet feed tray 31 to lift the document M upward, for example, by a method in which a lift plate is moved by an upward biasing force. When the documents M are placed on the sheet feed tray 31, the lift plate is raised upward by the lift mechanism, and the topmost document M comes into contact with the pickup roller 41.

The sheet discharge tray 32 stacks the discharged documents M. The document M fed to the sheet discharge tray 32 is discharged in the rear direction X2. The sheet discharge tray 32 is arranged in down direction Z2 from the sheet feed tray 31. The sheet discharge tray 32 has a rear wall portion 322. The rear wall portion 322 corresponds to, for example, "the end in the rear direction X2 of the sheet discharge tray 32".

In a known document feeding device, in a case in which a document M having a length in the front-rear direction X longer than the sheet feed tray 31 is conveyed, the end of the document M that protrudes from the sheet feed tray 31 hangs downward. In a case in which the end of the document M hangs downward from the sheet feed tray 31, the document M is pulled in the opposite direction to the conveying direction (front direction X1), making it difficult for the document M to move in the conveying direction (front direction X1), which may reduce the conveyability of the document M.

In contrast, in the image forming apparatus 1 of an embodiment according to the present disclosure, it is possible to maintain the conveyability of the sheet M regardless of the size of the document M, as will be described below.

The restricting portion 33 restricts the movement of the document M discharged onto the sheet discharge tray 32 in the rear direction X2. The restricting portion 33 is arranged at the end in the rear direction X2 of the sheet discharge tray 32. Thus, the restricting portion 33 comes into contact with the end in the rear direction X2 side of the document M discharged in the rear direction X2, and stops the progress of the document M. The restricting portion 33 has a first extension portion 330 and a second extension portion 340.

The first extension portion 330 fixes the second extension portion 340 to the sheet discharge tray 32. The first extension portion 330 extends in the rear direction X2 from the rear wall portion 322 of the sheet discharge tray 32.

The second extension portion 340 comes into contact with the lower surface of the document M discharged in the rear direction X2. The second extension portion 340 supports the document M placed on the sheet feed tray 31. The second extension portion 340 extends upward from the first extension portion 330. Thus, since the second extension portion 340 extends in the up direction Z1 from the first extension portion 330, which extends farther in the rear direction X2 than the rear wall portion 322, the end of the document M that protrudes in the rear direction X2 from the end in the rear direction X2 of the sheet feed tray 31 can be supported by the second extension portion 340. In other words, even when the document M has a length in the front-rear direction X that is longer than the sheet feed tray 31, the end of the document M that protrudes from the sheet feed tray 31 can be prevented from hanging in down direction Z2. Therefore, even when the document M has various sizes such as legal size, the document M is not pulled in the opposite direction to the conveying direction. Therefore, regardless of the size of the document M, the conveyability of the document M can be maintained. In addition, since the second extension portion 340 extends in the up direction Z1 from the first extension portion 330, which extends farther in the rear direction X2 than the rear wall portion 322, a document M that is longer in the front-rear direction X than the sheet discharge tray 32 can be placed on the sheet discharge tray 32 without being bent. Since the document M can be placed without being bent in the up direction Z1 or down direction Z2, the document M can be stacked stably, and the stackability of the documents M can be increased

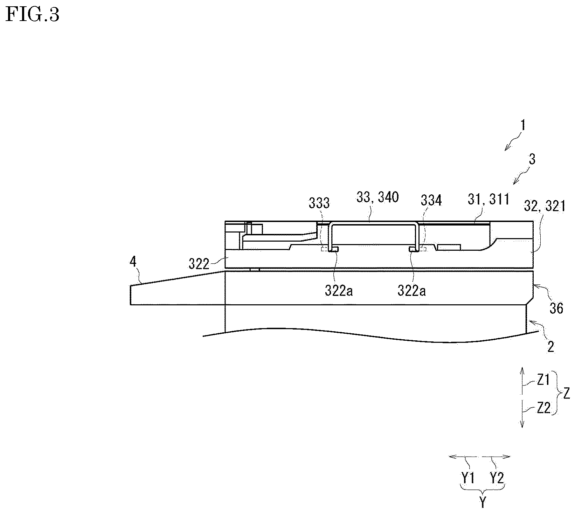

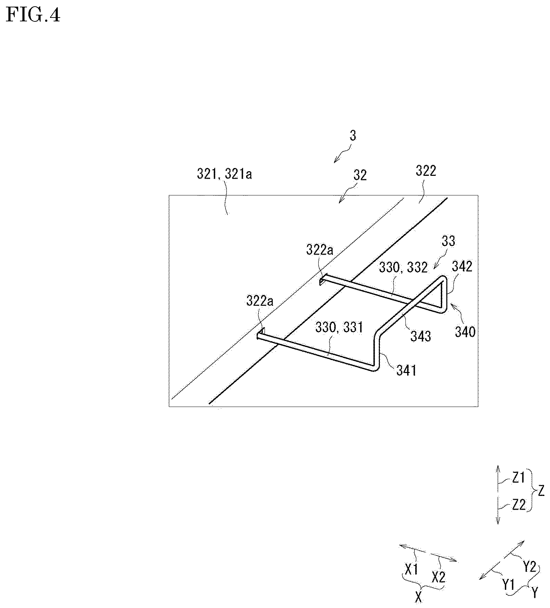

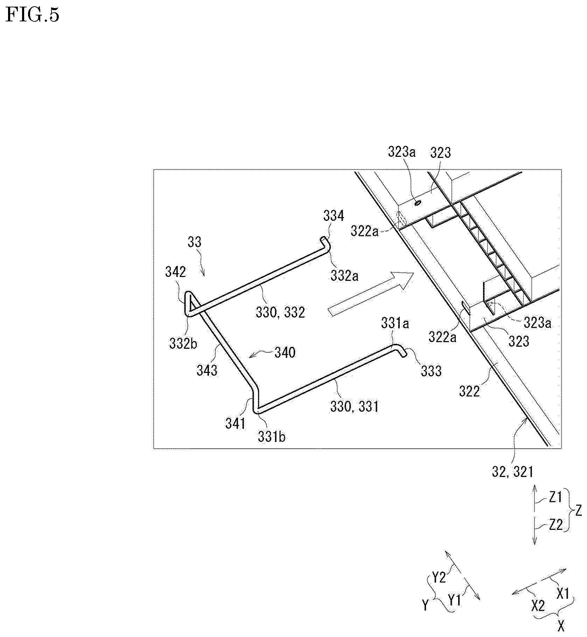

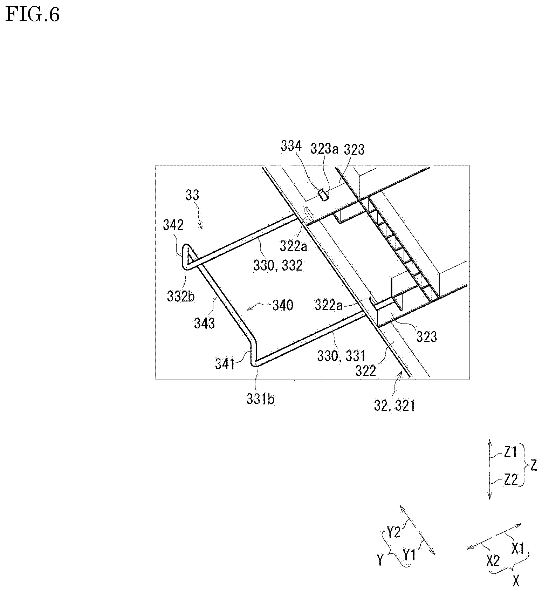

Next, the document feeding device 3 will be further described with reference to FIGS. 2 to 6. FIG. 3 is a view of the document feeding device 3 as seen from the rear direction X2. FIG. 4 is a perspective view of the restricting portion 33 attached to a sheet discharge tray 32. More specifically, FIG. 4 shows the appearance of the restricting portion 33 attached to the sheet discharge tray 32 as viewed from the up direction Z1 going diagonally rearward toward the left. FIG. 5 is a perspective view showing a state before the restricting portion is attached. FIG. 6 is a perspective view showing a state after the restricting portion has been attached. More specifically, FIGS. 5 and 6 show the appearance of the restricting portion 33 as viewed from the down direction Z2 going diagonally toward the right.

As shown in FIG. 2, the document feeding device 3 has a pickup roller 41, a separation roller 42, a first conveying roller 43, a registration roller 44, a second conveying roller 45, and a discharge roller 46.

The pickup roller 41 feeds the document M placed on the sheet feed tray 31 in the front direction X1. More specifically, the pickup roller 41 comes into contact with the topmost document M on the sheet feed tray 31. The pickup roller 41 is rotationally driven and picks up the topmost document M one sheet at a time and feeds the document M toward the separation roller 42. The pickup roller 41 starts to feed the next document M after a predetermined time has elapsed since a trailing end of the document M was fed.

The separation roller 42 feeds the document M picked up by the pickup roller 41 toward the first conveying roller 43 one sheet at a time. The first conveying roller 43 feeds the document M conveyed from the separation roller 42 toward the registration roller 44 one sheet at a time. Since the conveying path is curved in a region from the first conveying roller 43 to the registration roller 44, the conveying direction of the document M is changed from the front direction X1 to the rear direction X2.

The registration roller 44 feeds the conveyed document M to a reading position defined by a gap between the automatic document reading glass 362 and the reading guide 363 at a predetermined timing. In the ADF reading mode, when the document M passes between the reading guide 363 and the automatic document reading glass 362, an image formed on the surface of the document is read.

The second conveying roller 45 is arranged farther on the downstream side than the reading position in the conveying direction of the document M, and conveys the document M read at the reading position to the discharge roller 46.

The discharge roller 46 discharges the document M conveyed from the second conveying roller 45 toward the sheet discharge tray 32. The discharge roller 46 is located farther in the front direction X1 than the pickup roller 41 in the front-rear direction X. Thus, it is possible to prevent the document M from hitting the second extension portion 340 and being loaded in a state of being bent in the up direction Z1 or in the down direction Z2. In other words, in the front-rear direction X, a length from the second extension portion 340 to the discharge roller 46 is longer than a length from the second extension portion 340 to the pickup roller 41, so the document M conveyed from the sheet feed tray 31 is placed in an area from the second extension portion 340 to the discharge roller 46 without bending. Therefore, bending of the document M after discharge can be suppressed.

As shown in FIGS. 2 and 3, the sheet feed tray 31 is configured by a plate member that is substantially rectangular in plan view. The end in the rear direction X2 of the sheet feed tray 31 is located farther in the front direction X1 than the end in the rear direction X2 of the sheet discharge tray 32. The sheet feed tray 31 has a main portion 311, a placement surface 311a on which the document M is placed, and an end 311b in the rear direction X2 of the sheet feed tray 31.

The end of the main portion 311 in the front direction X1 is connected to an upper portion on the front side of the sheet discharge tray 32. The main portion 311 is configured in a substantially plate shape. The main portion 311 has an axis extending in the left-right direction Y at the end in the front direction X1, and is formed to be freely swingable about the axis. An upper surface of the main portion 311 is provided with a placement surface 311a. In the main portion 311, a height position is made higher going in the rear direction X2.

As shown in FIGS. 2 to 6, the sheet discharge tray 32 has a main portion 321, two openings 322a, and two connecting portions 323. The main portion 321 is located between the contact glass and the sheet feed tray 31. The main portion 321 has a placement surface 321a. The placement surface 321a is provided on an upper surface of the main portion 321. The placement surface 321a receives the document M discharged from the discharge roller 46. The placement surface 321a is positioned so as to become higher going in the rear direction X2. The main portion 321 has a front wall portion, a rear wall portion 322, a left wall portion, a right wall portion, and the connecting portions 323 (see FIGS. 5 and 6).

The rear wall portion 322 extends vertically in the down direction Z2 direction from a rear end of the placement surface 321a. The rear wall portion 322 is perpendicular to the front-rear direction X. A pair of left and right openings 322a are provided in the rear wall portion 322, which is an end in the rear direction X2 of the main portion 321.

The pair of left and right openings 322a are formed in a center portion in the left-right direction Y of the rear wall portion 322. Each opening 322a has a generally rectangular shape that is long in the left-right direction Y. The separation width between the pair of openings 322a in the left-right direction Y is set to be, for example, 1/4 to 1/3 of the width of the placement surface 321a in the left-right direction Y.

The connecting portions 323 support the restricting portion 33 relative to the sheet discharge tray 32. In addition, the connecting portions 323 define the position in the front-rear direction X of the restricting portion 33. The connecting portions 323 are provided in a pair on the left and right sides and are arranged inside the sheet discharge tray 32 (main portion 321). The connecting portion 323 on the left side extends in the front direction X1 from a rear surface of the rear wall portion 322 in the left direction Y1 of the opening 322a on the left side. The connecting portion 323 on the right side extends in the front direction X1 from a rear surface of the rear wall portion 322 in the right direction Y2 of the opening 322a on the right side. Each of the pair of connecting portions 323 has an opening 323a penetrating therethrough in the left-right direction Y.

As shown in FIGS. 2 to 6, the restricting portion 33 is formed of a single rod member. Thus, the restricting portion 33 can be easily obtained since the number of parts is small, the configuration is simple, and processing is easy. In the present embodiment, the restricting portion 33 is made of, for example, a metal material. Note that the material of the restricting portion 33 is not limited to metal. The restricting portion 33 only needs to have at least elastic properties, and may be made of a synthetic resin material.

The restricting portion 33 is configured to be detachable from the connecting portions 323 of the sheet discharge tray 32. When in use, the restricting portion 33 is attached to the connecting portions 323, and after use, the restricting portion 33 is detached from the connecting portions 323. The restricting portion 33 has a first extension portion 330 and a second extension portion 340. The first extension portion 330 has a first leg portion 331 and a second leg portion 332.

The first leg portion 331 extends along the front-rear direction X in the rear direction X2 from the rear wall portion 322. The first leg portion 331 has an end 331a on the front direction X1 side, an end 331b on the rear direction X2 side, and a connected portion 333. The connected portion 333 is bent in the left direction Y1 at the end 331a on the front direction X1 side of the first leg portion 331. The connected portion 333 is inserted through the opening 322a on the left side from the rear direction X2 to the front direction X1.

The second leg portion 332 extends in the rear direction X2 along the front-rear direction X from the rear wall portion 322. The second leg portion 332 is located at a position separated from the first leg portion 331 in the right direction Y2 from the first leg portion 331. The second leg portion 332 has an end 332a on the front direction X1 side, an end 332b on the rear direction X2 side, and a connected portion 334. The connected portion 334 is bent in the right direction Y2 at an end 332a in the front direction X1 of the second leg portion 332. The connected portion 334 is inserted through the opening 322a on the right side from the rear direction X2 toward the front direction X1.

When attaching the restricting portion 33 to the sheet discharge tray 32, first, the first leg portion 331 and the second leg portion 332 are held and pressed so that the distance between them in the left-right direction Y becomes small. In a state in which the first leg portion 331 and the second leg portion 332 are held and pressed, the connected portion 333 and connected portion 334 are inserted into the left and right openings 322a, respectively. The connected portion 333 and connected portion 334 are further moved in the front direction X1. Finally, the connected portion 333 and connected portion 334 are inserted into the openings 323a of the left and right connecting portions 323, respectively.

As described above, the first leg portion 331 and the second leg portion 332 have the connected portion 333 and the connected portion 334, respectively, at their ends in the front direction X1. The two openings 322a are provided in the rear wall portion 322 of the main portion 321 and correspond to the first leg portion 331 and the second leg portion 332, respectively. The connected portion 333 and the connected portion 334 are configured so as to be insertable through the two corresponding openings 322a, respectively. In addition, the connected portion 333 and the connected portion 334 are configured so as to be connectable to the two corresponding connecting portions 323, respectively. Thus, by holding and pressing the first leg portion 331 and the second leg portion 332, the connected portion 333 and the connected portion 334 can be inserted into the openings 322a. By releasing the holding and pressing action between first leg portion 331 and second leg portion 332, the connected portion 333 and the connected portion 334 can be inserted into opening 323a, respectively, and can be connected to connecting portions 323. Therefore, the restricting portion 33 can be easily attached to the sheet discharge tray 32.

The second extension portion 340 has a first pillar portion 341, a second pillar portion 342, and a support portion 343.

The first pillar portion 341 extends upward from the end 331b in the rear direction X2 of the first leg portion 331. The second pillar portion 342 is located at a position spaced apart from the first pillar portion 341 in the right direction Y2 from the first pillar portion 341. The second pillar portion 342 extends upward from the end 332b in the rear direction X2 of the second leg portion 332.

The support portion 343 supports the document M by connecting the end in the up direction Z1 of the first pillar portion 341 with the end in the up direction Z1 of the second pillar portion 342. Thus, the first leg portion 331 and the second leg portion 332 can have elastic properties in the left-right direction Y, and the restricting portion 33 can be easily formed from a single rod member. In addition, gaps are formed between the first leg portion 331 and the second leg portion 332 and between the first pillar portion 341 and the second pillar portion 342, and thus the document M can be easily gripped.

The support portion 343 is located farther in the rear direction X2 than the rear wall portion 322 which is the end in the rear direction X2 of the sheet discharge tray 32. In other words, the second extension portion 340 is located farther in the rear direction X2 than the end 311b in the rear direction X2 of the sheet feed tray 31. Thus, a document M that is longer in the front-rear direction X than the length of the sheet feed tray 31 can be placed on the placement surface 311a of the sheet feed tray 31, and a document M that is longer in the front-rear direction X than the length of the sheet discharge tray 32 can be placed on the placement surface 321a of the sheet discharge tray 32.

The support portion 343 is located at a height in the up-down direction Z equal to or higher than the placement surface 311a of the sheet feed tray 31. In other words, an upper end of the second extension portion 340 is at a height equal to or higher than the placement surface 311a of the sheet feed tray 31. Thus, a document M that is long in the front-rear direction X can be stably supported, and the document M can be smoothly fed to the pickup roller 41.

In the present embodiment, the document feeding device 3 includes the image reading portion 36 that reads an image of the document M fed from the sheet feed tray 31. Thus, it possible to read images of various sizes of documents M, such as legal size, regardless of the size of the sheet discharge tray 32.

In addition, in the present embodiment, the image forming apparatus 1 includes the document feeding device 3 and the image forming portion 25. Thus, documents M that are larger than the sheet feed tray 31 can be placed on the sheet feed tray 31. In addition, documents M that are larger than the sheet discharge tray 32 can be placed onto the sheet discharge tray 32. Therefore, an image read from the document M can be formed on the recording paper P regardless of the size of the sheet discharge tray 32.

Embodiments of a technique according to the present disclosure have been described above with reference to the drawings. However, the technique according to the present disclosure is not limited to the above-described embodiments, and can be embodied in various forms without departing from the spirit of the present disclosure. In addition, the components disclosed in the above embodiments can be modified as appropriate. For example, some of the components shown in one embodiment may be added to the components of another embodiment, or some of the components shown in one embodiment may be deleted from the embodiment.

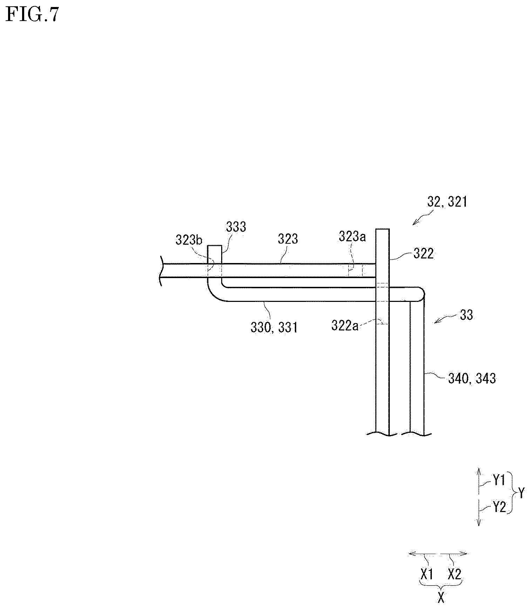

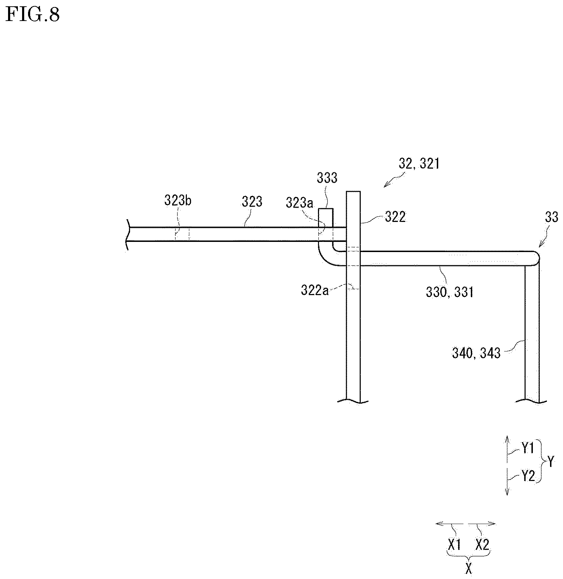

In addition, the drawings mainly show each component schematically to facilitate understanding of the technique according to the present disclosure, and the thickness, length, number, spacing, and the like of each component shown in the drawings may differ from the actual ones due to convenience of creating the drawings. Moreover, the configurations of the components shown in the above embodiments are merely examples and are not particularly limited, and it goes without saying that various modifications are possible without substantially departing from the effects according to the present disclosure.
(1) As described with reference to FIGS. 1 to 6, in the above embodiments, an example is given in which the restricting portion 33 is configured to be detachable from the sheet discharge tray 32, but the configuration is not limited to this. At the very least, configuration is sufficient as long as the document M can be supported. A modification of the document feeding device 3 will now be described with reference to FIGS. 7 and 8.

As shown in FIGS. 7 and 8, the main portion 321 has connecting portions 323. The connecting portions 323 are provided in a pair on the left and right sides and are arranged inside the main portion 321. The connecting portion 323 on the left side extends in the front direction X1 from a rear surface of the rear wall portion 322 in the left direction Y1 of the opening 322a on the left side. The connecting portion 323 on the right side extends in the front direction X1 from a rear surface of the rear wall portion 322 in the right direction Y2 of the opening 322a on the right side. The connecting portion 323 has an opening 323a penetrating in the left-right direction Y, and a second opening 323b located farther in the front direction X1 than the opening 323a. The opening 323a and the second opening 323b are each configured so that the connected portion 333 can be inserted therethrough.

The sheet discharge tray 32 is configured so that the first extension portion 330 of the restricting portion 33 can be stored therein. When the restricting portion 33 is not in use, the restricting portion 33 (first extension portion 330) is stored inside the sheet discharge tray 32, and the connected portion 333 is inserted into the second opening 323b. When the restricting portion 33 is used, the restricting portion 33 (first extension portion 330) is pulled out in the rear direction X2 from the sheet discharge tray 32, and the connected portion 333 is inserted into the opening 323a. The connected portion 334 is similar to the connected portion 333.

(2) As described with reference to FIGS. 1 to 6, in the above embodiment, an example is given in which the support portion 343 is positioned at a height position equal to or higher than the placement surface 311a of the sheet feed tray 31, but is not limited to this. It is sufficient that the restricting portion 33 is located at least farther in the rear direction X2 than the end in the rear direction X2 of the sheet discharge tray 32, and may be located at a height lower than the placement surface 311a of the sheet feed tray 31. In addition, by aligning the upper end of the support portion 343 with an extension line in the rear direction X2 of the placement surface 311a of the sheet feed tray 31, the document M can be made flat, and the conveyability of the document M can be further improved.

(3) As described with reference to FIGS. 1 to 6, in the above embodiment, an example is given in which the image forming apparatus 1 is an electrophotographic type, but the image forming apparatus 1 is not limited to this. The image forming apparatus 1 may be an inkjet printer or a laser printer.

The technique according to the present disclosure is applicable to document feeding devices and image forming apparatuses.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A document feeding device (3), comprising:
a sheet feed tray (31) configured to feed documents (M) to be fed in a first direction (X1);
a sheet discharge tray (32) arranged below the sheet feed tray (31) and configured to discharge the document (M) in a second direction (X2) opposite to the first direction (X1); and
a restricting portion (33) configured to restrict movement in the second direction (X2) of the document (M) discharged onto the sheet discharge tray (32); wherein
the restricting portion (33) includes:
a first extension portion (330) extending in the second direction (X2) from an end in the second direction (X2) of the sheet discharge tray (32); and
a second extension portion (340) extending in an up direction from the first extension portion (330).

2. The document feeding device (3) according to claim 1, wherein
the second extension portion (340) is located farther in the second direction (X2) than an end in the second direction (X2) of the sheet feed tray (31).

3. The document feeding device (3) according to claim 1 or 2, wherein
the restricting portion (33) is configured by a single rod member.

4. The document feeding device (3) according to claim 3, wherein
the first extension portion (330) includes:
a first leg portion (331) extending in the second direction (X2); and
a second leg portion (332) separated from the first leg portion (331) in a third direction (Y) and extending in the second direction (X2);
the third direction (Y) indicates a direction perpendicular to the first direction (X1) and the up direction; and
the second extension portion (340) includes:
a first pillar portion (341) extending in the up direction from an end in the second direction (X2) of the first leg portion (331);
a second pillar portion (342) extending in the up direction from an end in the second direction (X2) of the second leg portion (332); and
a support portion (343) configured to connect the first pillar portion (341) and the second pillar portion (342) to support the document (M).

5. The document feeding device (3) according to claim 4, wherein
the sheet discharge tray (32) includes:
a main portion (321) having a placement surface (321a);
two openings (322a) provided at end in the second direction (X2) of the main portion (321) and corresponding to the first leg portion (331) and the second leg portion (332); and
two connecting portions (323) provided inside the main portion (321) and corresponding to the first leg portion (331) and the second leg portion (332);
the first leg portion (331) and the second leg portion (332) each have a connected portion (333) at an end in the first direction (X1); and
the two connected portions (333) are configured so as to be insertable through the two corresponding openings (322a), and so as to be connectable to the two corresponding connecting portions (323).

6. The document feeding device (3) according to any one of claim 1 to 5, wherein
the sheet feed tray (31) includes a placement surface (311a) on which the document (M) is placed; and
an upper end of the second extension portion (340) is at a height equal to or higher than the placement surface (311a) of the sheet feed tray (31) in the up-down direction.

7. The document feeding device (3) according to any one of claim 1 to 6, further comprising:
a pickup roller (41) configured to feed the document (M) placed on the sheet feed tray (31) in the first direction (X1); and
a discharge roller (46) configured to discharge the document (M) toward the sheet discharge tray (32); wherein
the discharge roller (46) is located farther in the first direction (X1) than the pickup roller (41).

8. The document feeding device (3) according to any one of claim 1 to 7, further comprising:
an image reading portion (36) configured to read an image of the document (M) fed from the sheet feed tray (31).

9. An image forming apparatus (1), comprising:
a document feeding device (3) according to claim 8; and
an image forming portion (25) configured to form an image on a recording medium (P).
